Europäisches Patentamt

European Patent Office

Office européen des brevets

(19)

(11) Veröffentlichungsnummer: **0 014 385**
**B1**

(12) **EUROPÄISCHE PATENTSCHRIFT**

(45) Veröffentlichungstag der Patentschrift: 09.03.83

(21) Anmeldenummer: **80100349.2**

(22) Anmeldetag: **23.01.80**

(51) Int. Cl.³: **A 01 D 55/18,**
**A 01 D 35/26**

(54) **Rasenschneidgerät.**

(30) Priorität: 04.07.79 DE 2927075
03.02.79 DE 7902932 U

(43) Veröffentlichungstag der Anmeldung:
**20.08.80 Patentblatt 80/17**

(45) Bekanntmachung des Hinweises auf die Patenterteilung:
**09.03.83 Patentblatt 83/10**

(84) Benannte Vertragsstaaten:
**AT BE CH DE FR GB IT NL SE**

(56) Entgegenhaltungen:
**DE - A - 2 635 807**
**DE - A - 2 652 232**
**DE - U - 7 617 641**
**US - A - 2 697 322**
**US - A - 3 385 043**

(73) Patentinhaber: **Ering GmbH Metallwarenfabrik**
**Ringstrasse 1**
**D-8300 Ergolding (DE)**

(72) Erfinder: **Biberger, Hans**
**Landshuter Strasse 4**
**D-8300 Ergolding (DE)**

(74) Vertreter: **KUHNEN & WACKER**
**Patentanwaltsbüro**
**Schneggstrasse 3-5 Postfach 1729**
**D-8050 Freising (DE)**

## Rasenschneidgerät

Die Erfindung betrifft ein Rasenschneidgerät nach dem Oberbegriff des Anspruchs 1.

Ein solches Rasenschneidgerät ist in Form eines Rasenmähers beispielsweise aus der US—A—26 97 322 bekannt. Dabei sind die Schneidelemente als Messerstummel ausgebildet, die an der Ober- und Unterseite eines von der Welle radial ausragenden Messerarmes derart befestigt sind, daß die Schneidkanten parallel zueinander in einem Vertikalabstand liegen. Ähnlich ist aus der US—A—33 85 043 eine Anordnung zweier Messerbalken übereinander bekannt, deren Schneidelemente in unterschiedlichen Ebenen schneiden, wobei die beiden Messerbalken gegensinnig umlaufen. Durch derartige Mehrfachschnitte in unterschiedlichen Höhenlagen soll erreicht werden, daß etwa auf dem Rasen lose liegende Blätter oder sonstige botanische Abfallstoffe durch die obere Schneide zusätzlich beaufschlagt und so zerkleinert werden, daß ein einwandfreier Austrag auch dieser Stoffe aus dem Schneidbereich erfolgen kann, wobei durch eine weitgehende Zerkleinerung diese Fremdkörper nach dem Austrag zwischen die Grashalme eindringen und so von der Rasenoberfläche optisch verschwinden.

Dabei kann die Schneidkante des oberen Messers auch auf die Grashalme und dgl. einwirken, wenn diese ausreichend lang sind und daher in den Bereich des oberen Messers gelangen. Es erfolgt dann ein gleichzeitiger Schnitt des Halmes in der Schneidebene des unteren Messers und derjenigen des oberen Messers, so daß sich eine verbesserte Häckselwirkung ergibt.

Nachteilig ist dabei, daß bei entsprechend hohem Gras entweder beide Schneidkanten gleichzeitig schneiden, oder aber keine von ihnen. Durch die gleichzeitige Einwirkung beider Schneidkanten wird nicht nur der Schnitt in gewissem Sinne undefiniert, sondern es kann auch kein Vorschneiden mit erhöhter Schneidkraft an der schneidenden Kante erfolgen. Niedergedrücktes Gras, welches durch Einwirkung etwa der Räder des Mähers oder durch sonstige Einwirkungen in Fahrtrichtung des Mähers nach vorne geneigt ist, wird vom unteren Messer an einer von der Neigungslage der Grashalme abhängigen Stelle erfaßt und ausschließlich durch das untere Messer abgeschnitten, so daß sich in der aufgerichteten Stellung der Grashalme eine unregelmäßige Schnitthöhe ergibt.

Demgegenüber liegt der Erfindung die Aufgabe zugrunde, ein Rasenschneidgerät der im Oberbegriff des Anspruchs 1 umrissenen Gattung zu schaffen, welches entsprechend hohes Gras zunächst vorschneidet und anschließend einen gleichmäßigen, sauberen Feinschnitt der vorgeschnittenen Grashalme ermöglicht.

Diese Aufgabe wird erfindungsgemäß durch die kennzeichnenden Merkmale des Anspruchs 1 gelöst.

Dadurch wird erreicht, daß beim Einfahren in einen zu schneidenden Rasenbereich zunächst ein Schnitt mit den Schneidelementen der oberen Schneidebene, also im größeren Abstand vom Boden erfolgt, bevor die Schneidelemente der unteren Schneidebene wirksam werden. Erst anschließend erfolgt ein zweiter Schnitt der so vorgeschnittenen Grashalme durch die Schneidelemente der unteren Schneidebene. Abgesehen von der sich dadurch ergebenden Häckselwirkung auf das Gras selbst, welche den Transport des Grases in einen Grasfangbehälter erleichtert und dort eine bessere Füllung ergibt, erhalten die so vorgeschnittenen und damit verkürzten Grashalme auch bei relativ starker Neigungslage Gelengenheit, sich in der Luftströmung aufzurichten und werden so aufgerichtet durch die Schneidelemente der unteren Schneidebene erfaßt und feingeschnitten. Dadurch ergibt sich selbst bei hohem und gegebenenfalls niedergedrücktem Gras ein relativ gleichmäßiger Feinschnitt des Grases in einem Arbeitsgang, so daß in aller Regel ein mehrfaches Überfahren desselben Flächenbereiches zur Erzielung derselben Wirkung vermieden werden kann.

Bevorzugte Bemessungen des Vertikalabstandes der Schneidebenen einerseits und des Radialabstandes der Schneidelemente in benachbarten Ebenen andererseits ergeben sich aus den Unteransprüchen 2 bis 4. Diese Abstände sind insofern kritisch, als der Vertikalabstand die Arbeitshöhe des Vorschnittes über dem Boden und der Radialabstand insbesondere bei niedergedrücktem Gras, welches nur in Richtung der Neigungslage der Grashalme überfahren werden kann, den Umfang der Vorschneidarbeit definiert.

Zwar liegt ein wesentliches Anwendungsgebiet der Erfindung bei sogenannten Sichel-Rasenmähern mit Mähmessern. Jedoch ist eine Anwendung auch bei anderen Rasenschneidgeräten möglich, so etwa bei Rasenkantenschneidern, die anstelle umlaufender Messer andere umlaufende Schneidelemente wie etwa Nylonschnüre oder dgl. aufweisen. Bei Verwendung von Messern als Schneidelemente in Rasenmähern ergibt sich ein zusätzlicher Vorteil dadurch, daß die dort üblichen Luftablenkelemente auf sämtlichen Messern verteilt angeordnet werden können und damit eine gleichmäßige Erzeugung der für den Abtransport und das Hochstellen des Grases insbesondere für den Feinschnitt erforderlichen Luftströmung erreicht wird. Die im ersten Schnitt abgetrennten Spitzen der Grashalme werden durch die starke Luftströmung sofort aus dem Schneidbereich wegtransportiert, so daß sie beim zweiten Schnitt nicht stören. Insgesamt ergibt sich durch die gut verteilte Anordnung der Luftablenkelemente und die erfindungsgemäße Anordnung der Schneidelemente auch eine verminderte Geräuschentwicklung. Dabei sind die Schneidelemente oder Messer in den verscheidenen Ebenen bevorzugt gegeneinander versetzt angeordnet, so daß die Luftablenkelemente größtmöglichen Abstand voneinander erhalten. Die Luftablenkelemente an den Messern der oberen Schneidelemente ersetzen praktisch die Luftablenkelemente einer über der Schneidebene angeordneten Platte, wie sie aus der DE—A—26 35 807 bekannt ist, auf die wegen weiterer Einzelheiten insoweit ausdrücklich Bezug genommen wird.

Weitere Einzelheiten, Merkmale und Vorteile der Erfindung ergeben sich aus der nachfolgenden Beschreibung einer Ausfürhrungsform anhand der Zeichnung.

Es zeigt

Fig. 1 eine Seitenansicht eines Schneidwerks eines erfindungsgemäßen Rasenschneidgerätes und

Fig. 2 eine Draufsicht auf das Schneidwerk gemäß Fig. 1.

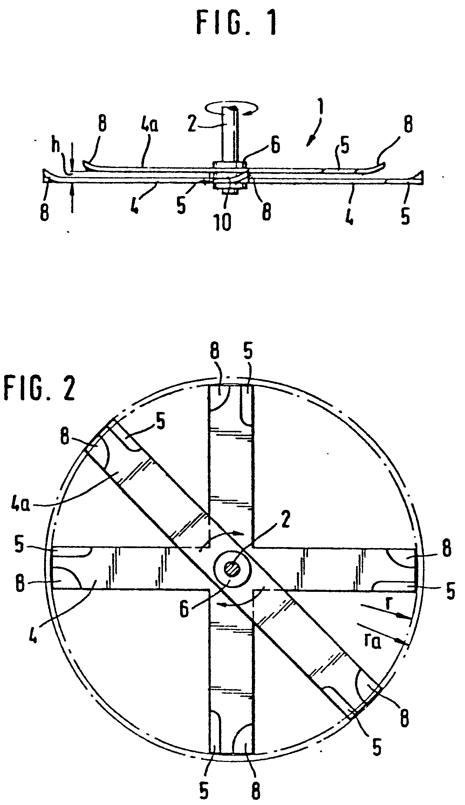

In der Zeichnung ist mit 1 das Schneidwerk insgesamt bezeichnet, das an einer Messerwelle 2 vorgesehen ist. Die Messerwelle 2 ist in der an sich bekannten Weise von einem Motor, beispielsweise einem Verbrennungsmotor des Rasenmähers angetrieben und durchsetzt von oben her ein nicht näher dargesteltes, das Schneidwerk 1 umgebendes Schutzgehäuse. An der Messerwelle 2 sind ein Messerkreuz 4 und im Abstand über dem Messerkreuz ein zweiarmiger Messerbalken 4a befestigt. Der Messerbalken 4a ist dabei in der aus Fig. 2 ersichtlichen Weise gegenüber dem Messerkreuz 4 auf Lücke versetzt angeordnet. Selbstverständlich könnte anstelle des Messerbalkens 4a ebenfalls ein Messerkreuz, gegenüber dem unteren Messerkreuz 4 um 45° versetzt, verwendet werden, jedoch führt dies zu einer im Regelfall nicht erforderlichen Erhöhung des Schwungmomentes und des Gewichtes. Das Messerkreuz 4 und der Messerbalken 4a tragen an ihren äußeren Enden in Umfangsrichtung vordere Messerschneiden 5, wie dies bei Sichel-Rasenmähern üblich ist.

Der obere Messerbalken 4a ist über eine Klemmhülse 6 oder dgl. an der Messerwelle 2 befestigt und stützt sich gegen das untere Messerkreuz 4 über ein gegebenenfalls auswechselbares Distanzstück 10 ab, welches eine Feineinstellung des gegenseitigen Abstandes von Messerkreuz 4 und Messerbalken 4a gemäß den jeweiligen Gegebenheiten ermöglicht. Dabei laufen Messerbalken 4a und messerkreuz 4 mit der Messerwelle 2 in übereinanderliegenden horizontalen Schneidebenen drehfest um.

Der mit h bezeichnete Vertikalabstand zwischen dem Messerkreuz 4 und dem Messerbalken 4a beträgt im Beispielsfalle 25 mm, womit beste Ergebnisse erzielt wurden, kann jedoch auch unter Berücksichtigung der Gegebenheiten des Einzelfalles zwischen 20 mm und 35 mm variiert werden. Insbesondere bei schwierigen Schneidbedingungen kann eine Einstellung des Vertikalabstandes h zwischen 5 und 50 mm vorgenommen werden.

Wie insbesondere aus Fig. 2 ersichtlich ist, weisen die als Schneidelemente wirkenden Messerschneiden 5 des Messerkreuzes 4 und des Messerbalkens 4a unterschiedlichen äußeren Schneidradius auf. Der Schneidradius r des unteren Messerkreuzes 4 ist dabei gegenüber dem Schneidradius $r_a$ des oberen Messerbalkens 4a bzw. deren Messerschneiden 5 um etwa 13 mm geringer, so daß die die Schneidelemente bildenden Messerschneiden 5 des oberen Messerbalkens 4a über diejenigen des unteren Messerkreuzes 4 radial hinausragen. Dieser radialabstand $(r_a - r)$ darf 10 mm nicht unterschreiten, um einen definierten Vorschnitt zu erhalten; er kann jedoch auf 20 mm und insbesondere in besonders galagerten Fällen oder bei anderen Schneidgeräten wie Kantenschneidern bis etwa 50 mm vergrößert werden.

Die äußeren, den Messerschneiden 5 gegenüberliegenden Enden der Arme des Messerbalkens 4a und des Messerkreuzes 4 sind in an sich bekannter Weise mit Abwinkelungen versehen, die Luftablenkelemente 8 bilden. Diese radial äußeren Luftablenkelemente 8 erzeugen unter Berücksichtigung der mit Pfeilen eingezeichneten Drehrichtung des Schneidwerkes 1 eine im wesentlichen nach oben und nach Umlenkung im Gehäuse auch radial nach außen gerichtete Luftströmung, in der soeben geschnittenes Gras in einem starken Luftstrom über eine Grasauswurföffnung des Gehäuses ausgeworfen oder in einem Grasfangbehälter gesammelt werden kann. Diese Luftströmungen im Inneren des Gehäuses erzeugen bei bekannten Rasenmähern, die lediglich einen Messerbalken oder ein Messerkreuz mit Luftablenkelementen 8 aufweisen, starke Geräusche, die selbst bei Verbrennungsmotoren noch das Motorgeräusch übertreffen können.

Durch die Anordnung der Luftablenkelemente 8 am oberen Messerbalken 4a versetzt zu den Luftablenkelementen 8 des unteren Messerkreuzes 4 wird jedoch eine geräuschmindernde Wirkung erzielt, wie dies in der DE—A—26 35 807 näher erläutert ist, bei der entsprechende Luftablenkelemente an einer über dem Messerkreuz angeordneten Platte vorgesehen sind. Dadurch wird eine pulsartionsarme Luftströmung erzeugt, die entsprechend geringe Geräuschentwicklung mit sich bringt.

Wie aus der Zeichnung ohne weiteres ersichtlich ist, gelangen bei der Vorwärtsbewegung eines mit dem Schneidwerk 1 ausgestatteten Rasenmähers zunächst die Messerschneiden des oberen Messerbalkens 4a zum Einsatz und schneiden das Gras gewissermaßen vor. Erst anschließend werden auch die Messerschneiden 5 des unteren Messerkreuzes 4 wirksam, wobei zu beachten ist, daß auch ein vergleichsweise geringer radialer Abstand

(r$_a$ – r) mit Rücksicht auf die zur Vortriebsgeschwindigkeit hohe Drehzahl von 3000 U/min oder mehr eine deutliche Staffelung des Wirksamwerdens des Messerbalkens 4a und des Messerkreuzes 4 ergibt. Dabei erfolgt eine gute Zerkleinerung oder Zerhäckselung des Mähgutes und eine saubere Abführung durch die erzeugte starke Luftsströmung bei geringer Geräuschentwicklung. Niedergedrückte Grashalme werden durch den Messerbalken 4a so vorgeschnitten, daß der verbleibende Grasstummel sich aufrichten kann und in dieser Stellung von den Messerschneiden 5 des unteren Messerkreuzes 4 erfaßt wird. Dadurch ergibt sich ein Schnitt mit großer Gleichmäßigkeit, wie er sonst nur dadurch erreicht werden könnte, daß das Gras zunächst mit hoher Mähereinstellung vorgeschnitten und sodann in einem zweiten Arbeitsgang mit tiefer Mähereinstellung feingeschnitten wird.

**Patentansprüche**

1. Rasenschneidgerät mit einem an einer vertikalen, drehend antreibbaren Welle gelagerten Schneidwerk mit wenigstens zwei Schneidelementen, die in gegenseitigem Vertikalabstand in übereinanderliegenden Schneidebenen umlaufen, dadurch gekennzeichnet, daß jedes in einer unteren, bodennahen Schneidebene umlaufende Schneidelement (5, 4) einen gegenüber einem darüberliegenden Schneidelement (5, 4a) um wenigstens 10 mm geringeren äußeren Schneidradius (r) aufweist.

2. Rasenschneidgerät nach Anspruch 1, dadurch gekennzeichnet, daß der Vertikalabstand (h) zwischen Schneidelementen (5) in benachbarten Schneidebenen zwischen 5 und 50 mm liegt.

3. Rasenschneidgerät nach Anspruch 2, dadurch gekennzeichnet, daß der Vertikalabstand (h) zwischen 20 und 35 mm, vorzugsweise bei 25 mm liegt.

4. Rasenschneidgerät nach einem der Ansprüche 1 bis 3, dadurch gekennzeichnet, daß die Differenz zwischen den äußeren Schneidradien (r$_a$, r) von Schneidelementen (5) benachbarter Schneidebenen nicht größer als 50 mm, vorzugsweise nicht größer als 20 mm ist, insbesondere bei 13 mm liegt.

5. Rasenschneidgerät nach einem der Ansprüche 1 bis 4, dadurch gekennzeichnet, daß die Schneidelemente (5) Messerschneiden sind.

6. Rasenschneidgerät nach Anspruch 5, dadurch gekennzeichnet, daß alle Messer (4, 4a) oder eine entsprechende Messerscheibe Luftablenkelemente (8) aufweisen.

7. Rasenschneidgerät nach Anspruch 5 oder 6, dadurch gekennzeichnet, daß die Messer als wenigstens zweiarmige Messerbalken (4, 4a) ausgebildet sind, die über ein zwischengeschaltetes Distanzstück (10) an der Messerwelle (2) befestigt sind.

8. Rasenschneidgerät nach Anspruch 7, dadurch gekennzeichnet, daß wenigstens das untere Messer (4) als vierarmiges Messerkreuz ausgebildet ist.

9. Rasenschneidgerät nach einem der Ansprüche 5 bis 8, dadurch gekennzeichnet, daß sämtliche Luftablenkelemente (8) in Umfangsrichtung gegeneinander versetzt angeordnet sind.

**Revendications**

1. Appareil de coupe du gazon comprenant un équipage de coupe monté sur un arbre vertical pouvant être entraîné en rotation et comprenant au moins deux éléments de coupe qui tournent à un certain écartement vertical mutuel dans des plans de coupe superposés, caractérisé en ce que chaque élément de coupe (5, 4) qui tourne dans un plan de coupe inférieur, proche du sol, présente un rayon de coupe extérieur (r) inférieur d'au moins 10 mm à celui d'un élément de coupe (5, 4a) situé au-dessus.

2. Appareil de coupe du gazon selon la revendication 1, caractérisé en ce que l'écartement vertical (h) entre les éléments de coupe (5) situés dans des plans de coupe voisins est compris entre 5 et 50 mm.

3. Appareil de coupe du gazon selon la revendication 2, caractérisé en ce que l'écartement vertical (h) est compris entre 20 et 35 mm et est de préférence d'environ 25 mm.

4. Appareil de coupe du gazon selon l'une des revendications 1 à 3, caractérisé en ce que la différence entre les rayons de coupe extérieurs (r$_a$, r) des éléments de coupe 5 appartenant à des plans de coupe adjacents n'est pas plus grande que 50 mm, de préférence pas plus grande que 20 mm, et est en particulier d'environ 13 mm.

5. Appareil de coupe du gazon selon l'une des revendications 1 à 4, caractérisé en ce que les éléments de coupe (5) sont des tranchants de lames.

6. Appareil de coupe du gazon selon la revendication 5, caractérisé en ce que toutes les lames ou une lame circulaire correspondante présentent des éléments déflecteurs d'air (8).

7. Appareil de coupe du gazon selon la revendication 5 ou 6, caractérisé en ce que les lames sont constituées par des barres à lames (4, 4a) à au moins deux bras qui sont fixées à l'arbre portelames (2) par l'intermédiaire d'une entretoise interposée (10).

8. Appareil de coupe du gazon selon la revendication 7, caractérisé en ce qu'au moins la lame inférieure (4) est constituée par un croisillon de lames à quatre bras.

9. Appareil de coupe du gazon selon l'une des revendications 5 à 8, caractérisé en ce que tous les éléments déflecteurs d'air (8) sont décalés les uns par rapport aux autres dans la direction circonférentielle.

## Claims

1. A lawn mowing apparatus with an upright, power-turned shaft and with a cutting unit supported on the shaft, the cutting unit having at least two cutter elements for turning in two cutting planes, which are spaced in an upright direction and are placed one over the other, characterized in that each cutter element (5, 4), designed for turning in a lower cutting plane near the ground, has a radius of cutting (r) which is at least 10 mm smaller than the radius of the cutter element (5, 4) placed thereover.

2. The lawn mowing apparatus as claimed in claim 1 characterized in that the vertical distance (h) between the cutter elements (5) in any one plane and the plane next thereto is between 5 and 50 mm.

3. The lawn mowing apparatus as claimed in claim 2, characterized in that the vertical spacing (h) is between 20 and 35 mm and more specially 25 mm.

4. The lawn mowing apparatus as claimed in any one of claims 1 to 3, characterized in that the difference between the outer radiuses (ra, r) of cutting of cutter elements (5) of any one plane and the next plane is not greater than 20 mm and is more specially equal to 13 mm.

5. The lawn mowing apparatus as claimed in any one of claims 1 to 4 characterized in that the cutting elements (5) are knife plates.

6. The lawn mowing apparatus as claimed in claim 5 characterized in that all knives (4, 4a) or a knife plate answering thereto have air guiding elements (8).

7. The lawn mowing apparatus as claimed in claim 5 or claim 6, characterized in that the knives are designed in the form of knife beams (4, 4a) having at least two arms and being fixed to the knife shaft (2) with a spacer (10) placed therebetween.

8. The lawn mowing apparatus as claimed in claim 7, characterized in that at least the lower knife (4) is designed as a four-armed knife in form of a cross.

9. The lawn mowing apparatus as claimed in any one of claims 5 to 8, characterized in that all air guiding elements (8) are out of line with each other in the round-the-shaft direction.

0014385

# FIG. 1

# FIG. 2

1